# EUROPÄISCHE PATENTSCHRIFT

(11) **EP 2 241 439 B1**
(45) Veröffentlichungstag und Bekanntmachung des Hinweises auf die Patenterteilung: **18.03.2015**
(21) Anmeldenummer: 10160336.3
(22) Anmeldetag: 19.04.2010
(51) Int. Cl.: B32B 29/08, D21H 27/40

(54) **Mehrlagige Wellpappe**
Multi-layer corrugated cardboard
Carton ondulé multicouche

(30) Priorität: 17.04.2009 DE 102009017744
(43) Veröffentlichungstag der Anmeldung: 20.10.2010
(73) Patentinhaber: BHS Corrugated Maschinen-und Anlagenbau GmbH, 92729 Weiherhammer (DE)
(72) Erfinder: Roier, Paul, 92284 Poppenricht (DE)
(74) Vertreter: Rau, Manfred

(56) Entgegenhaltungen:
- WO-A1-98/18614
- FR-A1- 2 652 035
- GB-A- 1 071 132
- US-A- 4 012 276
- RAL Deutsches Institut für Gütesicherung und Kennzeichnung e.V.: "Güte- und Prüfbestimmungen für Wellpappe" 2005, XP002592571 Gefunden im Internet: URL:http://www.ral-wellpappe.de/guetebesti mmungen/guetebestimmungen.htm [gefunden am 2010-07-19]

## Beschreibung

Die Erfindung betrifft eine mehrlagige Wellpappe nach dem Oberbegriff des Anspruches 1 und ein Verfahren zur Herstellung der Wellpappe nach Anspruch 14.

Derartige mehrlagige Wellpappen, bei denen die erste gewellte Papierbahn eine größere Teilung und damit auch eine größere Wellenhöhe als eine zweite gewellte Papierbahn aufweist, werden sehr oft auf ihrer zweiten Papier-Deckbahn bedruckt. Hierbei hat sich in der Praxis gezeigt, dass in der an sich glatten zweiten äußeren Papier-Deckbahn, die die Hauptsichtseite der Wellpappe bilden soll, in periodischen Abständen Vertiefungen auftreten, die beim Bedrucken zu unterschiedlichem Farbauftrag, also zu einer Streifenbildung, führen. Beim Einsatz von relativ dickem Papier von einem Flächengewicht von mehr als 160 g/m² werden diese Nachteile zwar weitgehend vermieden; für Wellpappe werden aber immer dünnere Papiere, insbesondere von weniger als 100 g/m² eingesetzt, was in besonderem Maße zu den vorstehend angesprochenen Problemen führt.

Aus der WO 98/18614 A1 ist es bekannt, abweichend von dem üblichen Verfahren zur Herstellung von mehrlagiger Wellpappe zeitgleich zwischen einem ersten Paar von Riffelwalzen eine erste gewellte Papierbahn und in einem zweiten Paar von Riffelwalzen eine zweite gewellte Papierbahn zu formen. Die beiden gewellten Papierbahnen werden zwischen jeweils einer Riffelwalze jedes Riffelwalzenpaares zusammengeführt, wobei gleichzeitig eine glatte innere Papierbahn zwischen die gewellten Papierbahnen eingeführt wird. Die gewellten Papierbahnen werden hierbei "Kopf auf Kopf" mit der inneren Papierbahn verleimt. Die Teilungen der Wellungen der Papierbahnen sind hierbei so gewählt, dass entweder ein Teilungsverhältnis von 1:2 oder ein 1:4 entsteht. Der Grund für diese Teilungsverhältnisse liegt in der WO 98/18614 vorgeschlagenen Fertigungsweise, da eine auch nur geringfügige Verbindung zwischen den gewellten Papierbahnen und der inneren Deckbahn nur dann erreichbar ist, wenn die erwähnte "Kopf auf Kopf-Verbindung hergestellt wird. Die vorstehenden angesprochenen Probleme können hiermit nicht gelöst werden.

Aus der GB 1,071,132 A ist eine fünflagige Wellpappe bekannt, deren äußere Deckbahnen, jeweils durch Laminate von Papierbahnen mit einem Flächengewicht von 205 g/m² gebildet werden. Die gewählten Bahnen weisen eine C-Wellenart und eine B-Wellenart auf. Die vorstehend angesprochenen Probleme treten wegen der steifen äußeren Deckbahnen nicht auf.

Aus der FR 2 652 035 A1 ist eine fünflagige Wellpappe bekannt, bei der auf einer Maschine eine an einer Seite mit einer Papier-Deckbahn versehene gewellte Papierbahn und eine gewellte Papierbahn, die mit zwei äußeren Papier-Deckbahnen versehen ist, zusammengeführt und miteinander verleimt werden. Aufgrund der Art der Herstellung können durch einfache Umstellung der Maschine unterschiedliche Wellenarten bei den gewählten Papierbahnen erzeugt werden. Die beim Bedrucken auftretenden Probleme sind hierbei nicht angesprochen und auch nicht gelöst.

Der Erfindung liegt daher die Aufgabe zugrunde, eine mehrlagige Wellpappe der gattungsgemäßen Art so auszugestalten, dass auch bei Einsatz besonders dünner Papiere für die Deckbahnen zumindest die zweite äußere Deckbahn so glatt bleibt, dass eine fehlerfreie Bedruckung möglich ist.

Diese Aufgabe wird erfindungsgemäß durch die Merkmale im Kennzeichnungsteil des Anspruches 1 gelöst.

Der Kern der Erfindung besteht darin, dass die Teilungen der miteinander zu kombinierenden gewellten Papierbahnen innerhalb der vorgegebenen Teilungsbereiche so gewählt werden, dass die jeweilige Zahl der Teilungen der ersten und der zweiten gewellten Papierbahn minimiert werden, bei denen die Summe dieser Teilungen jeweils gleich ist. Bei einer Anordnung "Kopf auf Kopf" wird also der Abstand der Kontaktpunkte der Wellenköpfe der beiden Papierbahnen auf der inneren Deckbahn minimiert, wodurch die ansonsten auftretenden periodischen Vertiefungen auf den äußeren Deckbahnen so weit reduziert werden, dass sie keinen Einfluss mehr auf eine einwandfreie Bedruckung haben. Selbst wenn die Verleimung der beiden gewellten Papierbahnen mit der inneren Deckbahn nicht Kopf auf Kopf erfolgt, sind die Vertiefungen in der äußeren Deckbahn so stark reduziert, dass eine qualitativ zufriedenstellende Bedruckung möglich ist. Die in der Fachwelt auch als "Fluten" bezeichneten Wellenarten und deren jeweilige Teilungsbereiche werden nach DIN 55468-1 gewählt, und zwar derzeit nach der Ausgabe August 2004.

Es hat sich gezeigt, dass durch die erfindungsgemäße Ausgestaltung einer mehrlagigen Wellpappe auch deren sonstige Eigenschaften, insbesondere ihre Festigkeitseigenschaften, verbessert werden. Der Kantenstauchwiderstand, der sogenannte ECT-Wert (Edge Compression Test), der BCT-Wert (Box Compression Test), d. h. der Wert, bei dem eine aus Wellpappe gefaltete Schachtel zerstört wird und der FCT-Wert (Flat Crash Test) werden deutlich verbessert. Grundsätzlich gilt, dass die Qualität und die Festigkeit der jeweiligen Wellpappe umso besser ist, je kleiner das Teilungsverhältnis der gewählten Wellenarten, also der gewählten Fluten, ist.

Die Unteransprüche geben eine Vielzahl vorteilhafter Ausgestaltungen für einzelne Kombinationen von Wellpappearten wieder.

Anspruch 14 beschreibt ein Verfahren zur Herstellung der erfindungsgemäßen Wellpappebahn.

Weitere Vorteile, Merkmale und Einzelheiten der Erfindung ergeben sich aus der nachfolgenden Beschreibung von Ausführungsbeispielen anhand der Zeichnung. Es zeigt
- Fig. 1: eine zweiwellige Wellpappe mit einer Kombination von Wellenarten A/B,
- Fig. 2: eine zweiwellige Wellpappe mit einer Kombination von Wellenarten C/F,
- Fig. 3: eine zweiwellige Wellpappe mit einer Kombination von Wellenarten C/B,
- Fig. 4: eine zweiwellige Wellpappe mit einer Kombination von Wellenarten B/E,
- Fig. 5: eine zweiwellige Wellpappe mit einer Kombination von Wel lenarten E/F,
- Fig. 6: eine zweiwellige Wellpappe mit einer Kombination von Wellenarten C/D bzw. D/F,
- Fig. 7: eine zweiwellige Wellpappe mit einer Kombination von Wellenarten B/D,
- Fig. 8: eine dreiwellige Wellpappe mit einer Kombination von Wellenarten A/B/B und
- Fig. 9: eine dreiwellige Wellpappe mit einer Kombination von Wellenarten C/D/D.

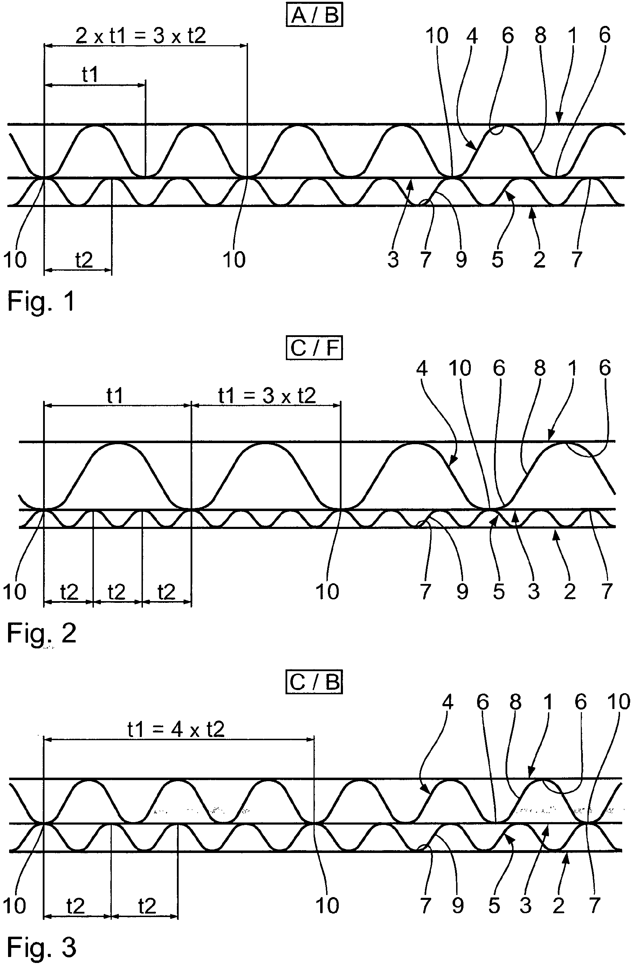

Die in Fig. 1 dargestellte Wellpappe weist eine glatte erste äußere Papier-Deckbahn 1, eine glatte zweite äußere Papier-Deckbahn 2 und eine ebenfalls glatte innere Papier-Deckbahn 3 auf. Sie weist weiterhin eine erste gewellte Papierbahn 4 und eine zweite gewellte Papierbahn 5 auf. Die erste gewellte Papierbahn 4 ist zwischen der ersten äußeren Papier-Deckbahn 1 und der inneren Papier-Deckbahn 3 angeordnet und an ihren ersten Wellenköpfen 6 mit der ersten äußeren Papier-Deckbahn 1 und der inneren Papier-Deckbahn 3 verklebt. Die zweite gewellte Papierbahn 5 ist entsprechend zwischen der zweiten äußeren Papier-Deckbahn 2 und der inneren Papier-Deckbahn 3 angeordnet und an ihren zweiten Wellenköpfen 7 mit der zweiten äußeren Papier-Deckbahn 2 bzw. der inneren Papier-Deckbahn 3 verklebt.

Die ersten Wellen 8 der ersten gewellten Papierbahn 4 und die zweiten Wellen 9 der zweiten gewellten Papierbahn 5 weisen jeweils eine Teilung t1 bzw. t2 auf, wobei gilt: t1 > t2.

Dies ist der übliche Aufbau einer zweiwelligen Wellpappe. Die Herstellung ist allgemein bekannt. Es werden zuerst jeweils eine einseitig mittels einer Papier-Deckbahn beschichtete gewellte Papierbahn hergestellt, wie es aus der EP 0 917 949 B (entsprechend US 6,092,579 A) bekannt ist. Zwei derartige Wellpappebahnen laufen dann zusammen mit einer weiteren Deckbahn in eine sogenannte Heizpartie ein, wo sie insgesamt miteinander verleimt werden. Entsprechende Maschinen sind beispielsweise in EP 1 007 347 A1 dargestellt und beschrieben.

Für die nachfolgenden Erörterungen wird von einer Zuordnung von Wellenarten zu Teilungsbereichen der Wellen gemäß DIN 55468-1, Ausgabe August 2004, ausgegangen, wobei in Klammern Teilungsobergrenzen angegeben sind, die sich in der Praxis abweichend von der Norm bereits ergeben bzw. durchgesetzt haben:

| Wellenart | Wellenteilung |
|---|---|
| | t |
| | mm |
| G | ≤ 1,8 |
| F | 1,9 bis 2,6 |
| E | 3,0 bis 3,5 |
| D | 3,8 bis 4,8 |
| B | 5,5 bis 6,5 |
| C | 6,8 bis 7,9 (bis 8,1) |
| A | 8,0 bis 9,5 (bis 10,0) |
| K | ≥ 10,0 |

Wie Fig. 1 entnehmbar ist, sind dort erste Wellen 8 der Wellenart A und zweite Wellen 9 der Wellenart B miteinander kombiniert. Dabei entsprechen zwei Teilungen t1 drei Teilungen t2. Es gilt also: a = 2 und b = 3, wobei a die Zahl der Wellen 8 der ersten gewellten Papierbahn 4 und b die Zahl der Wellen 9 der zweiten gewellten Papierbahn 5 wiedergeben, bei denen der Abstand von a ersten Wellenköpfen 6 und von b zweiten Wellenköpfen 7 voneinander identisch ist. a und b sind also ganze Zahlen. Wenn - entsprechend der Darstellung in Fig. 1 - einmal ein erster Wellenkopf 6 und ein zweiter Wellenkopf 7 Kopf auf Kopf, also miteinander fluchtend, also an gemeinsamen Kontaktpunkten 10, an der inneren Papier-Deckbahn 3 anliegen und mit dieser verleimt sind, dann gilt dies fortlaufend immer in Abständen a x t1 = b x t2, im konkreten Fall also 2 x t1 = 3 x t2.

Wie Fig. 2 entnehmbar ist, sind dort erste Wellen 8 der Wellenart C und zweite Wellen 9 der Wellenart F miteinander kombiniert. Dabei entsprechen einer Teilung t1 drei Teilungen t2. Es gilt also: a = 1 und b = 3 bzw. t1 = 3 x t2.

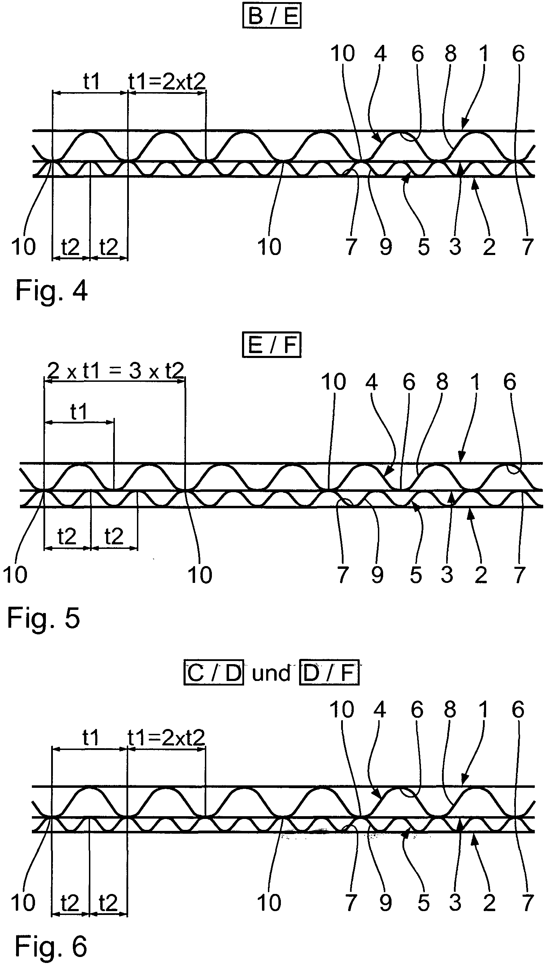

Wie Fig. 3 entnehmbar ist, sind dort erste Wellen 8 der Wellenart C und zweite Wellen 9 der Wellenart B miteinander kombiniert. Dabei entsprechen drei Teilungen t1 vier Teilungen t2. Es gilt also: a = 3 und b = 4. Wie Fig. 4 entnehmbar ist, sind dort erste Wellen 8 der Wellenart B und zweite Wellen 9 der Wellenart E miteinander kombiniert. Dabei entsprechen einer Teilung t1 zwei Teilungen t2. Es gilt also: a = 1 und b = 2.

Wie Fig. 5 entnehmbar ist, sind dort erste Wellen 8 der Wellenart E und zweite Wellen 9 der Wellenart F miteinander kombiniert. Dabei entsprechen zwei Teilungen t1 drei Teilungen t2. Es gilt also: a = 2 und b = 3.

Wie Fig. 6 entnehmbar ist, sind dort erste Wellen 8 der Wellenart C und zweite Wellen 9 der Wellenart D miteinander kombiniert. Dabei entsprechen einer Teilung t1 zwei Teilungen t2. Es gilt also: a = 1 und b = 2. Das Teilungsverhältnis ist also das gleiche wie bei der Kombination B/E nach Fig. 4. Dies gilt auch für das Teilungsverhältnis bei einer Kombination der Wellenarten D und F.

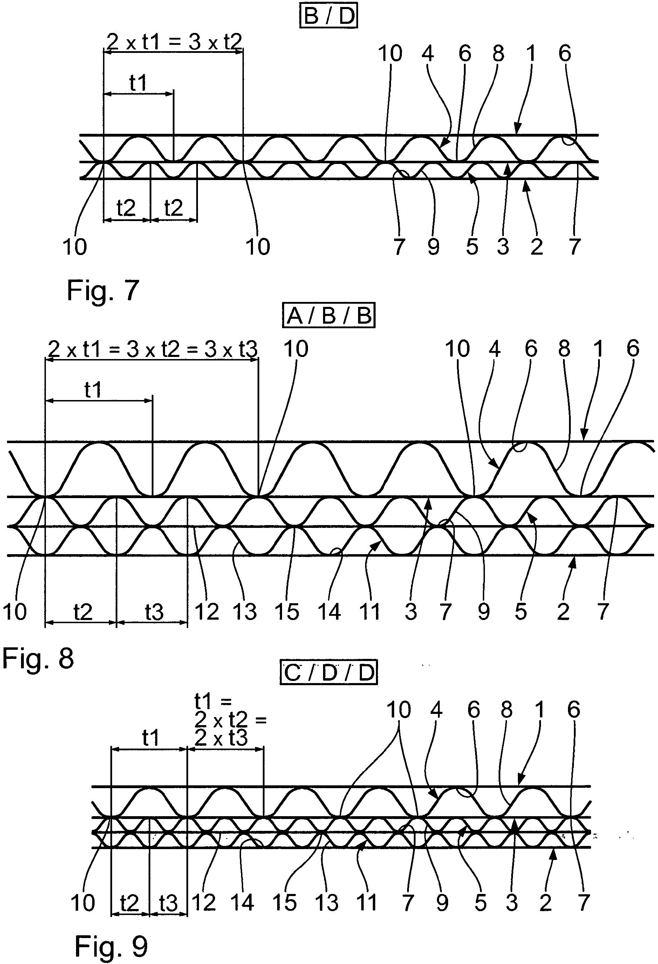

Wie Fig. 7 entnehmbar ist, sind dort erste Wellen 8 der Wellenart B und zweite Wellen der Wellenart D miteinander kombiniert. Dabei entsprechen zwei Teilungen t1 drei Teilungen t2. Es gilt also: a = 2 und b = 3. Das Teilungsverhältnis ist also das Gleiche wie bei der Kombination E/F nach Fig. 5.

Bei den in Fig. 8 und 9 dargestellten Wellpappebahnen handelt es sich um Triplex-Bahnen, das heißt sie haben zusätzlich zu den bereits geschilderten Deckbahnen 1 bis 3 und gewellten Papierbahnen 4 und 5 noch eine dritte gewellte Papierbahn 11 und zwischen dieser und der zweiten gewellten Papierbahn 5 eine zweite innere Papier-Deckbahn 12. Die dritte gewellte Papierbahn 11 weist dritte Wellen 13 mit dritten Wellenköpfen 14 auf.

Wie Fig. 8 entnehmbar ist, sind dort erste Wellen 8 der Wellenart A und zweite Wellen 9 der Wellenart B miteinander kombiniert. Zusätzlich ist eine dritte gewellte Papierbahn 11 mit dritten Wellen 13 der Wellenart B vorgesehen, wobei die Verklebung der zweiten Wellenköpfe 7 und der dritten Wellenköpfe 14 mit der zweiten inneren Papier-Deckbahn 12 an zweiten Kontaktpunkten 15 erfolgt. Die zweite gewellte Papierbahn 5 und die dritte gewellte Papierbahn 11 sind also Kopf auf Kopf mit der zweiten inneren Papier-Deckbahn 12 verklebt, wie es aus der DE 198 28 124 A1 bekannt ist. Dabei entsprechen zwei Teilungen t1 drei Teilungen t2 und drei Teilungen t3, wobei t3 die Teilung der dritten gewellten Papierbahn 11 bezeichnet. Es gilt also: a = 2 und b = 3 und c = 3, wobei für c die gleiche Definition gilt, wie sie vorher für a und b aufgestellt wurde.

Wie Fig. 9 entnehmbar ist, sind dort erste Wellen 8 der Wellenart C und zweite Wellen 9 der Wellenart D und dritte Wellen 13 der Wellenart D miteinander kombiniert. Dabei entsprechen einer Teilung t1 zwei Teilungen t2 und zwei Teilungen t3. Es gilt also: a = 1 und b = 2 und c = 2.

## Patentansprüche

1. Mehrlagige Wellpappe,
- mit einer besonders dünnen glatten ersten äußeren Papier-Deckbahn (1) mit einem Flächengewicht von weniger als 100 g/m²,
- mit einer besonders dünnen glatten zweiten äußeren Papier-Deckbahn (2) mit einem Flächengewicht von weniger als 100 g/m²,
- mit mindestens einer besonders dünnen glatten inneren Papier-Deckbahn (3, 12) mit einem Flächengewicht von weniger als 100 g/m²,
- mit einer ersten gewellten Papierbahn (4), die
-- erste Wellen (8) einer ersten Wellenart (A oder B oder C oder E) mit einer ersten Teilung t1 innerhalb eines vorgegebenen Teilungsbereichs aufweist,
-- erste Wellenköpfe (6) der ersten Wellen (8) aufweist und
-- zwischen der ersten äußeren Papier-Deckbahn (1) und einer ersten inneren Papier-Deckbahn (3) angeordnet ist und die an ihren ersten Wellenköpfen (6) mit der ersten äußeren Papier-Deckbahn (1) und der ersten inneren Papier-Deckbahn (3) verklebt ist,
und
- mit mindestens einer zweiten gewellten Papierbahn (5), die
-- zweite Wellen (9) einer zweiten Wellenart (B oder D oder E oder F) mit einer zweiten Teilung t2 innerhalb eines vorgegebenen Teilungsbereichs aufweist,
-- zweite Wellenköpfe (7) der zweiten Wellen (9) aufweist,
-- zwischen der ersten inneren Papier-Deckbahn (3) und einer weiteren Papier-Deckbahn (2) angeordnet ist und
-- deren zweite Wellenköpfe (7) mit der weiteren Papier-Deckbahn (2) und der ersten inneren Papier-Deckbahn (3) verklebt sind,
dass die ersten Wellenarten (A oder B oder C oder E) und die zweiten Wellenarten (B oder D oder E oder F) und die ersten Teilungen t1 und die zweiten Teilungen t2 mit ihren vorgegebenen Teilungsbereichen im Wesentlichen DIN 55468-1 wie folgt entsprechen:
| Wellenart | Wellenteilung |
|---|---|
| | t |
| | mm |
| G | ≤ 1,8 |
| F | 1,9 bis 2,6 |
| E | 3,0 bis 3,5 |
| D | 3,8 bis 4,8 |
| B | 5,5 bis 6,5 |
| C | 6,8 bis 7,9 (bis 8,1) |
| A | 8,0 bis 9,5 (bis 10,0) |
| K | ≥ 10,0 |
dass die ersten Teilungen t1 und die zweiten Teilungen t2 derart innerhalb ihres jeweiligen vorgegebenen Teilungsbereichs gewählt werden, dass die jeweilige Zahl der Teilungen der ersten und der zweiten gewellten Papierbahn minimiert werden, bei denen die Summe dieser Teilungen jeweils gleich ist und
wobei gilt:
t1 > t2 und
a x t1 =bxt2,
wobei a und b ganzzahlig sind und
wobei gilt: a ≤ 3 und b ≤ 4.

2. Mehrlagige Wellpappe nach Anspruch 1, **dadurch gekennzeichnet, dass** für eine Kombination einer ersten gewellten Papierbahn (4) mit einer ersten Wellenart A mit einer ersten Teilung t1 in einem vorgegebenen Teilungsbereich von 8,0 mm ≤ t1 ≤ 10,0 mm und einer zweiten gewellten Papierbahn (5) mit einer zweiten Wellenart B mit einer zweiten Teilung t2 in einem vorgegebenen Teilungsbereich von 5,5 mm ≤ t2 ≤ 6,5 mm gilt:
a = 2 und
b=3.

3. Mehrlagige Wellpappe nach Anspruch 1, **dadurch gekennzeichnet, dass** für eine Kombination einer ersten gewellten Papierbahn (4) mit einer ersten Wellenart C mit einer ersten Teilung t1 in einem vorgegebenen Teilungsbereich von 6,8 mm ≤ t1 ≤ 8,1 mm und einer zweiten gewellten Papierbahn (5) mit einer zweiten Wellenart F mit einer zweiten Teilung t2 in einem vorgegebenen Teilungsbereich von 1,9 mm ≤ t2 ≤ 2,6 mm gilt:
a = 1 und
b=3.

4. Mehrlagige Wellpappe nach Anspruch 1, **dadurch gekennzeichnet, dass** für eine Kombination einer ersten gewellten Papierbahn (4) mit einer ersten Wellenart C mit einer ersten Teilung t1 in einem vorgegebenen Teilungsbereich von 6,8 mm ≤ t1 ≤ 8,1 mm und einer zweiten gewellten Papierbahn (5) mit einer zweiten Wellenart B mit einer zweiten Teilung t2 in einem vorgegebenen Teilungsbereich von 5,5 mm ≤ t2 ≤ 6,5 mm gilt:
a = 3 und
b = 4.

5. Mehrlagige Wellpappe nach Anspruch 1, **dadurch gekennzeichnet, dass** für eine Kombination einer ersten gewellten Papierbahn (4) mit einer ersten Wellenart B mit einer ersten Teilung t1 in einem vorgegebenen Teilungsbereich von 5,5 mm ≤ t1 ≤ 6,5 mm und einer zweiten gewellten Papierbahn (5) mit einer zweiten Wellenart E mit einer zweiten Teilung t2 in einem vorgegebenen Teilungsbereich von 3,0 mm ≤ t2 ≤ 3,5 mm gilt:
a = 1 und
b=2.

6. Mehrlagige Wellpappe nach Anspruch 1, **dadurch gekennzeichnet, dass** für eine Kombination einer ersten gewellten Papierbahn (4) mit einer ersten Wellenart E mit einer ersten Teilung t1 in einem vorgegebenen Teilungsbereich von 3,0 mm ≤ t1 ≤ 3,5 mm und einer zweiten gewellten Papierbahn (5) mit einer zweiten Wellenart F mit einer zweiten Teilung t2 in einem vorgegebenen Teilungsbereich von 1,9 mm ≤ t2 ≤ 2,6 mm gilt:
a = 2 und
b=3.

7. Mehrlagige Wellpappe nach Anspruch 1, **dadurch gekennzeichnet, dass** für eine Kombination einer ersten gewellten Papierbahn (4) mit einer ersten Wellenart C mit einer ersten Teilung t1 in einem vorgegebenen Teilungsbereich von 6,8 mm ≤ t1 ≤ 8,1 mm und einer zweiten gewellten Papierbahn (5) mit einer zweiten Wellenart D mit einer zweiten Teilung t2 in einem vorgegebenen Teilungsbereich von 3,8 mm ≤ t2 ≤ 4,8 mm gilt:
a = 1 und
b=2.

8. Mehrlagige Wellpappe nach Anspruch 1, **dadurch gekennzeichnet, dass** für eine Kombination einer ersten gewellten Papierbahn (4) mit einer ersten Wellenart D mit einer ersten Teilung t1 in einem vorgegebenen Teilungsbereich von 3,8 mm ≤ t1 ≤ 4,8 mm und einer zweiten gewellten Papierbahn (5) mit einer zweiten Wellenart F mit einer zweiten Teilung t2 in einem vorgegebenen Teilungsbereich von 1,9 mm ≤ t2 ≤ 2,6 mm gilt:
a = 1 und
b = 2.

9. Mehrlagige Wellpappe nach Anspruch 1, **dadurch gekennzeichnet, dass** für eine Kombination einer ersten gewellten Papierbahn (4) mit einer ersten Wellenart B mit einer ersten Teilung t1 in einem vorgegebenen Teilungsbereich von 5,5 mm ≤ t1 ≤ 6.5 mm und einer zweiten gewellten Papierbahn (5) mit einer zweiten Wellenart D mit einer zweiten Teilung t2 in einem vorgegebenen Teilungsbereich von 3,8 mm ≤ t2 ≤ 4,8 mm gilt:
a = 2 und
b =3.

10. Mehrlagige Wellpappe nach Anspruch 1, **dadurch gekennzeichnet, dass** für eine Kombination einer ersten gewellten Papierbahn (4) mit einer ersten Wellenart A mit einer ersten Teilung t1 in einem vorgegebenen Teilungsbereich von 8,0 mm ≤ t1 ≤ 10,0 mm, einer zweiten gewellten Papierbahn (5) mit einer zweiten Wellenart B mit einer zweiten Teilung t2 in einem vorgegebenen Teilungsbereich von 5,5 mm ≤ t2 ≤ 6,5 mm und einer dritten Wellenart B mit einer Teilung t3 in einem vorgegebenen Teilungsbereich von 5,5 mm ≤ t3 ≤ 6,5 mm gilt:
t1 > t3 und
a xt1 = c xt3,
wobei c ganzzahlig ist und wobei gilt:
a=2
b=3und
c =3

11. Mehrlagige Wellpappe nach Anspruch 1, **dadurch gekennzeichnet, dass** für eine Kombination einer ersten gewellten Papierbahn (4) mit einer ersten Wellenart C mit einer ersten Teilung t1 in einem vorgegebenen Teilungsbereich von 6,8 mm ≤ t1 ≤ 8,1 mm, einer zweiten gewellten Papierbahn (5) mit einer zweiten Wellenart D mit einer zweiten Teilung t2 in einem vorgegebenen Teilungsbereich von 3,8 mm ≤ t2 ≤ 4,8 mm und einer dritten Wellenart D mit einer Teilung t3 in einem vorgegebenen Teilungsbereich von 3,8 mm ≤ t3 ≤ 4,8 mm gilt:
t1 > t3 und
a xt1 = c xt3,
wobei c ganzzahlig ist und wobei gilt:
a = 1
b = 2 und
c =2

12. Mehrlagige Wellpappe nach einem der Anspruche 1, **dadurch gekennzeichnet,**
**dass** die ersten Wellerlköpfe (6) der ersten gewellten Papierbahn (4) und die zweiten Wellerlköpfe (7) der zweiten gewellten Papierbahn (5) derart mit der inneren Papier-Deckbahn (3) verklebt sind, dass jeweils erste Wellenköpfe (6) im Abstand a x t1 und zweite Wellenköpfe (7) im Abstand b x t2 voneinander deckungsgleich miteinander sind.

13. Mehrlagige Wellpappe nach Anspruch 12, **dadurch gekennzeichnet, dass** dritte Wellenköpfe (14) einer dritten gewellten Papierbahn (11) derart mit einer inneren Papier-Deckbahn (12) verklebt sind, dass jeweils zweite Wellenköpfe (7) im Abstand b x t2 und dritte Wellenköpfe (14) im Abstand c x t3 voneinander deckungsgleich miteinander sind.

14. Verfahren zur Herstellung einer mehrlagigen Wellpappe nach einem der Ansprüche 1 bis 13, **dadurch gekennzeichnet,**
**dass** eine einseitig mittels einer besonders dünnen glatten äußeren Papier-Deckbahn (1) mit einem Flächengewicht von weniger als 100 g/m² beschichtete gewellte Papierbahn (4) und eine einseitig mit einer besonders dünnen glatten inneren Papier-Deckbahn (3, 12) mit einem Flächengewicht von weniger als 100 g/m² beschichtete gewellte Papierbahn (5) und eine weitere besonders dünne glatte äußere Papier-Deckbahn (2) mit einem Flächengewicht von weniger als 100 g/m² in eine Heizpartie eingeführt werden, wo sie insgesamt miteinander verleimt werden.

## Claims

1. Multi-layer corrugated cardboard, comprising
- a particularly thin smooth first outer paper linerboard (1) having a basis weight of less than 100 g/m²,
- a particularly thin smooth second outer paper linerboard (2) having a basis weight of less than 100 g/m²,
- at least one particularly thin smooth inner paper linerboard (3, 12) having a basis weight of less than 100 g/m²,
- a first corrugated paper web (4) which
-- has first flutes (8) of a first flute type (A or B or C or E) having a first pitch t1 within a predetermined pitch range,
-- has first corrugation tips (6) of the first flutes (8), and
-- is arranged between the first outer paper linerboard (1) and a first inner paper linerboard (3), and which is glued, at its first corrugation tips (6), to the first outer paper linerboard (1) and the first inner paper linerboard (3),
and
- at least a second corrugated paper web (5) which
-- has second flutes (9) of a second flute type (B or D or E or F) having a second pitch t2 within a predetermined pitch range,
-- has second corrugation tips (7) of the second flutes (9),
-- is arranged between the first inner paper linerboard (3) and an additional paper linerboard (2), and
-- the second corrugation tips (7) of which are glued to the additional paper linerboard (2) and the first inner paper linerboard (3),
**characterised in**
**that** the first flute types (A or B or C or D) and the second flute types (B or D or E or F) as well as the first pitches t1 and the second pitches t2 with their predetermined pitch ranges substantially comply with DIN 55468-1 as follows:
| Flute type | Flute pitch |
|---|---|
| | t |
| | mm |
| G | ≤ 1,8 |
| F | 1,9 to 2,6 |
| E | 3,0 to 3,5 |
| D | 3,8 to 4,8 |
| B | 5,5 to 6,5 |
| C | 6,8 to 7,9 (to 8,1) |
| A | 8,0 to 9,5 (to 10,0) |
| K | ≥ 10,0 |
**that** the first pitches t1 and the second pitches t2 are selected from their respective predetermined pitch range such that the respective number of pitches of the first and the second corrugated paper web are minimised, wherein the sum of said pitches is in each case the same, and
wherein the following applies:
t1 > t2, and
a x t1 = b x t2,
with a and b being integers, and
wherein the following applies: a ≤ 3 and b ≤ 4.

2. Multi-layer corrugated cardboard according to claim 1, **characterised in**
**that** the following applies to a combination of a first corrugated paper web (4) with a first flute type A having a first pitch t1 in a predetermined pitch range of 8.0 mm ≤ t1 ≤ 10.0 mm and a second corrugated paper web (5) with a second flute type B having a second pitch t2 in a predetermined pitch range of 5.5 mm ≤ t2 ≤ 6.5 mm:
a = 2, and
b = 3.

3. Multi-layer corrugated cardboard according to claim 1, **characterised in that** the following applies to a combination of a first corrugated paper web (4) with a first flute type C having a first pitch t1 in a predetermined pitch range of 6.8 mm ≤ t1 ≤ 8.1 mm and a second corrugated paper web (5) with a second flute type F having a second pitch t2 in a predetermined pitch range of 1.9 mm ≤ t2 ≤ 2.6 mm:
a = 1, and
b = 3.

4. Multi-layer corrugated cardboard according to claim 1, **characterised in**
**that** the following applies to a combination of a first corrugated paper web (4) with a first flute type C having a first pitch t1 in a predetermined pitch range of 6.8 mm ≤ t1 ≤ 8.1 mm and a second corrugated paper web (5) with a second flute type B having a second pitch t2 in a predetermined pitch range of 5.5 mm ≤ t2 ≤ 6.5 mm:
a = 3, and
b=4.

5. Multi-layer corrugated cardboard according to claim 1, **characterised in**
**that** the following applies to a combination of a first corrugated paper web (4) with a first flute type B having a first pitch t1 in a predetermined pitch range of 5.5 mm ≤ t1 ≤ 6.5 mm and a second corrugated paper web (5) with a second flute type E having a second pitch t2 in a predetermined pitch range of 3.0 mm ≤ t2 ≤ 3.5 mm:
a = 1, and
b = 2.

6. Multi-layer corrugated cardboard according to claim 1, **characterised in**
**that** the following applies to a combination of a first corrugated paper web (4) with a first flute type E having a first pitch t1 in a predetermined pitch range of 3.0 mm ≤ t1 ≤ 3.5 mm and a second corrugated paper web (5) with a second flute type F having a second pitch t2 in a predetermined pitch range of 1.9 mm ≤ t2 ≤ 2.6 mm:
a = 2, and
b = 3.

7. Multi-layer corrugated cardboard according to claim 1, **characterised in**
**that** the following applies to a combination of a first corrugated paper web (4) with a first flute type C having a first pitch t1 in a predetermined pitch range of 6.8 mm ≤ t1 ≤ 8.1 mm and a second corrugated paper web (5) with a second flute type D having a second pitch t2 in a predetermined pitch range of 3.8 mm ≤ t2 ≤ 4.8 mm:
a = 1, and
b = 2.

8. Multi-layer corrugated cardboard according to claim 1, **characterised in**
**that** the following applies to a combination of a first corrugated paper web (4) with a first flute type D having a first pitch t1 in a predetermined pitch range of 3.8 mm ≤ t1 ≤ 4.8 mm and a second corrugated paper web (5) with a second flute type F having a second pitch t2 in a predetermined pitch range of 1.9 mm ≤ t2 ≤ 2.6 mm:
a = 1, and
b = 2.

9. Multi-layer corrugated cardboard according to claim 1, **characterised in**
**that** the following applies to a combination of a first corrugated paper web (4) with a first flute type B having a first pitch t1 in a predetermined pitch range of 5.5 mm ≤ t1 ≤ 6.5 mm and a second corrugated paper web (5) with a second flute type D having a second pitch t2 in a predetermined pitch range of 3.8 mm ≤ t2 ≤ 4.8 mm:
a = 2, and
b = 3.

10. Multi-layer corrugated cardboard according to claim 1, **characterised in**
**that** the following applies to a combination of a first corrugated paper web (4) with a first flute type A having a first pitch t1 in a predetermined pitch range of 8.0 mm ≤ t1 ≤ 10.0 mm, a second corrugated paper web (5) with a second flute type B having a second pitch t2 in a predetermined pitch range of 5.5 mm ≤ t2 ≤ 6.5 mm and a third flute type B having a pitch t3 in a predetermined pitch range of 5.5 mm < t3 ≤ 6.5 mm:
t 1 > t3 and
a x t1 = c x t3,
wherein c is an integer and wherein
a=2
b = 3 and
c=3.

11. Multi-layer corrugated cardboard according to claim 1, **characterised in**
**that** the following applies to a combination of a first corrugated paper web (4) with a first flute type C having a first pitch t1 in a predetermined pitch range of 6.8 mm ≤ t1 ≤ 8.1 mm, a second corrugated paper web (5) with a second flute type D having a second pitch t2 in a predetermined pitch range of 3.8 mm ≤ t2 ≤ 4.8 mm and a third flute type D having a pitch t3 in a predetermined pitch range of 3.8 mm < t3 ≤ 4.8 mm:
t1 > t3 and
a x t1 =cxt3,
wherein c is an integer and wherein
a = 1
b = 2 and
c = 2.

12. Multilayer corrugated cardboard according to one of claims 1, **characterised in**
**that** the first corrugation tips (6) of the first corrugated paper web (4) and the second corrugation tips (7) of the second corrugated paper web (5) are glued to the inner paper linerboard (3) such that first corrugation tips (6) at a distance a x t1 from each other are in each case congruent with second corrugation tips (7) at a distance of b x t2 from each other.

13. Multilayer corrugated cardboard according to claim 12, **characterised in**
**that** third corrugation tips (14) of a third corrugated paper web (4) are glued to an inner paper linerboard (12) such that second corrugation tips (7) at a distance b x t2 from each other are in each case congruent with third corrugation tips (14) at a distance c x t3 from each other.

14. Method for the production of a multilayer corrugated cardboard according to one of claims 1 to 13, **characterised in**
**that** a corrugated paper web (4) lined on one side with a particularly thin smooth outer paper linerboard (1) having a basis weight of less than 100 g/m² and a corrugated paper web (5) lined on one side with a particularly thin smooth inner paper linerboard (3, 12) having a basis weight of less than 100 g/m² and another particularly thin smooth outer paper linerboard (2) having a basis weight of less than 100 g/m² are introduced into a heating section where they are entirely glued together.

## Revendications

1. Carton ondulé multicouche,
- comprenant une première bande de recouvrement en papier (1), plane, externe, particulièrement fine, avec un grammage inférieur à 100 g/m²,
- comprenant une deuxième bande de recouvrement en papier (2), plane, particulièrement fine, avec un grammage inférieur à 100 g/m²,
- comprenant au moins une bande de recouvrement en papier (3, 12) plane, interne, particulièrement fine, avec un grammage inférieur à 100 g/m²,
- comprenant une première bande de papier ondulé (4), qui
-- présente des premières ondulations (8) d'un premier type d'ondulations (A ou B, ou C, ou E) avec une première subdivision t1 dans un domaine de partition prédéterminé,
-- présente des premiers sommets d'ondulations (6) des premières ondulations (8), et
-- est disposée entre la première bande de recouvrement en papier (1) externe et une première bande de recouvrement en papier (3) interne et qui est collée au niveau de ses premiers sommets d'ondulations (6) avec la première bande de recouvrement en papier (1) externe et avec la première bande de recouvrement en papier (3) interne,
et
- comprenant au moins une deuxième bande de papier ondulé (5) qui
-- présente des deuxièmes ondulations (9) d'un deuxième type d'ondulations (B ou D, ou E, ou F) avec une deuxième subdivision t2 dans un domaine de partition prédéterminé,
-- présente des deuxièmes sommets d'ondulations (7) des deuxièmes ondulations (9),
-- est disposée entre la première bande de recouvrement en papier (3) interne et une autre bande de recouvrement en papier (2) et
-- dont les deuxièmes sommets d'ondulation (7) sont collés avec l'autre bande de recouvrement en papier (2) et la première bande de recouvrement en papier (3) interne,
**caractérisé en ce**
**que** les premiers types d'ondulations (A ou B, ou C, ou E) et les deuxièmes types d'ondulations (B ou D, ou E, ou F) et les premières subdivisions t1 et les deuxièmes subdivisions t2 comprenant les domaines de partition prédéterminés correspondent dans l'ensemble à la norme DIN 55468-1 de la manière suivante :
| Type d'ondulation | Partition des ondulations |
|---|---|
| | t |
| | mm |
| G | ≤ 1,8 |
| F | 1,9 à 2,6 |
| E | 3,0 à 3,5 |
| D | 3,8 à 4,8 |
| B | 5,5 à 6,5 |
| C | 6,8 à 7,9 (jusqu'à 8,1) |
| A | 8,0 à 9, 5 (jusqu'à 10,0) |
| K | ≥ 10,0 |
**que** les premières subdivisions t1 et les deuxièmes subdivisions t2 sont choisies à l'intérieur de leur domaine de partition prédéterminé respectif de telle sorte que le nombre de partitions correspondant de la première bande de papier ondulé et de la deuxième sont minimisés, où la somme de ces subdivision est identique et
où l'on a :
t1 > t2 et
a x t1 = b x t2,
a et b étant des nombres entiers et
où l'on a : au 3 et b ≤ 4.

2. Carton ondulé multicouche selon la revendication 1, **caractérisé en ce**
**que**, pour une combinaison d'une première bande de papier ondulé (4) avec un premier type d'ondulations A avec une première subdivision t1 dans un domaine de partition prédéterminé de 8,0 mm ≤ t1 ≤ 10,0 mm et d'une deuxième bande de papier ondulé (5) avec un deuxième type d'ondulations B avec une deuxième subdivision t2 dans un domaine de partition prédéterminé de 5,5 mm ≤ t2 ≤ 6,5 mm, on ait
a = 2 et
b = 3.

3. Carton ondulé multicouche selon la revendication 1, **caractérisé en ce**
**que**, pour une combinaison d'une première bande de papier ondulé (4) avec un premier type d'ondulations C avec une première subdivision t1 dans un domaine de partition prédéterminé de 6,8 mm ≤ t1 ≤ 8,1 mm et d'une deuxième bande de papier ondulé (5) avec un deuxième type d'ondulations F avec une deuxième subdivision t2 dans un domaine de partition prédéterminé de 1,9 mm ≤ t2 ≤ 2,6 mm, on ait
a = 1 et
b = 3.

4. Carton ondulé multicouche selon la revendication 1, **caractérisé en ce**
**que**, pour une combinaison d'une première bande de papier ondulé (4) avec un premier type d'ondulations C avec une première subdivision t1 dans un domaine de partition prédéterminé de 6,8 mm ≤ t1 ≤ 8,1 mm et d'une deuxième bande de papier ondulé (5) avec un deuxième type d'ondulations B avec une deuxième subdivision t2 dans un domaine de partition prédéterminé de 5,5 mm, t2 ≤ 6,5 mm, on ait
a = 3 et
b = 4.

5. Carton ondulé multicouche selon la revendication 1, **caractérisé en ce**
**que**, pour une combinaison d'une première bande de papier ondulé (4) avec un premier type d'ondulations B avec une première subdivision t1 dans un domaine de partition prédéterminé de 5,5 mm ≤ t1 ≤ 6,5 mm et d'une deuxième bande de papier ondulé (5) avec un deuxième type d'ondulations E avec une deuxième subdivision t2 dans un domaine de partition prédéterminé de 3,0 mm ≤ t2 ≤ 3,5 mm, on ait
a = 1 et
b = 2.

6. Carton ondulé multicouche selon la revendication 1, **caractérisé en ce**
**que**, pour une combinaison d'une première bande de papier ondulé (4) avec un premier type d'ondulations E avec une première subdivision t1 dans un domaine de partition prédéterminé de 3,0 mm ≤ t1 ≤ 3,5 mm et d'une deuxième bande de papier ondulé (5) avec un deuxième type d'ondulations F avec une deuxième subdivision t2 dans un domaine de partition prédéterminé de 1,9 mm ≤ t2 ≤ 2,6 mm, on ait
a = 2 et
b = 3.

7. Carton ondulé multicouche selon la revendication 1, **caractérisé en ce**
**que**, pour une combinaison d'une première bande de papier ondulé (4) avec un premier type d'ondulations C avec une première subdivision t1 dans un domaine de partition prédéterminé de 6,8 mm ≤ t1 ≤ 8,1 mm et d'une deuxième bande de papier ondulé (5) avec un deuxième type d'ondulations D avec une deuxième subdivision t2 dans un domaine de partition prédéterminé de 3,8 mm ≤ t2 ≤ 4,8 mm, on ait :
a = 1 et
b = 2.

8. Carton ondulé multicouche selon la revendication 1, **caractérisé en ce**
**que**, pour une combinaison d'une première bande de papier ondulé (4) avec un premier type d'ondulations D avec une première subdivision t1 dans un domaine de partition prédéterminé de 3,8 mm ≤ t1 ≤ 4,8 mm et d'une deuxième bande de papier ondulé (5) avec un deuxième type d'ondulations F avec une deuxième subdivision t2 dans un domaine de partition prédéterminé de 1,9 mm ≤ t2 ≤ 2,6 mm, on ait :
a = 1 et
b = 2.

9. Carton ondulé multicouche selon la revendication 1, **caractérisé en ce**
**que**, pour une combinaison d'une première bande de papier ondulé (4) avec un premier type d'ondulations B avec une première subdivision t1 dans un domaine de partition prédéterminé de 5,5 mm ≤ t1 ≤ 6,5 mm et d'une deuxième bande de papier ondulé (5) avec un deuxième type d'ondulations D avec une deuxième subdivision t2 dans un domaine de partition prédéterminé de 3,8 mm ≤ t2 ≤ 4,8 mm, on ait :
a = 2 et
b = 3.

10. Carton ondulé multicouche selon la revendication 1, **caractérisé en ce**
**que**, pour une combinaison d'une première bande de papier ondulé (4) avec un premier type d'ondulations A avec une première subdivision t1 dans un domaine de partition prédéterminé de 8,0 mm ≤ t1 ≤ 10,0 mm, d'une deuxième bande de papier ondulé (5) avec un deuxième type d'ondulations B avec une deuxième subdivision t2 dans un domaine de partition prédéterminé de 5,5 mm ≤ t2 ≤ 6,5 mm, et d'un troisième type d'ondulations B avec une partition t3 dans un domaine de partition prédéterminé de 5,5 mm < t3 ≤ 6,5 mm, on ait :
t1 > t3 et
a x t1 = c x t3,
c étant un nombre entier et où l'on a :
a = 2
b = 3 et
c = 3.

11. Carton ondulé multicouche selon la revendication 1, **caractérisé en ce**
**que**, pour une combinaison d'une première bande de papier ondulé (4) avec un premier type d'ondulations C avec une première subdivision t1 dans un domaine de partition prédéterminé de 6,8 mm ≤ t1 ≤ 8,1 mm, d'une deuxième bande de papier ondulé (5) avec un deuxième type d'ondulations D avec une deuxième subdivision t2 dans un domaine de partition prédéterminé de 3,8 mm ≤ t2 ≤ 4,8 mm, et d'un troisième type d'ondulations D avec une partition t3 dans un domaine de partition prédéterminé de 3,8 mm < t3 ≤ 4,8 mm, on ait :
t1 > t3 et
a x t1 = c x t3,
c étant un nombre entier, et où l'on a :
a = 1
b = 2 et
c = 2.

12. Carton ondulé multicouche selon l'une des revendications 1, **caractérisé en ce**
**que** les premiers sommets d'ondulations (6) de la première bande de papier ondulé (4) et les deuxièmes sommets d'ondulations (7) de la deuxième bande de papier ondulé (5) sont collés avec la bande de recouvrement en papier (3) interne de telle manière que, chaque fois, les premiers sommets d'ondulations (6) dans l'intervalle a x t1 et les deuxièmes sommets d'ondulations (7) dans l'intervalle b x t2 coïncident les uns avec les autres.

13. Carton ondulé multicouche selon la revendication 12, **caractérisé en ce**
**que** les troisièmes sommets d'ondulations (14) d'une troisième bande de papier ondulé (11) sont collés avec une bande de recouvrement en papier (12) interne de telle manière que, chaque fois, les deuxièmes sommets d'ondulations (7) dans l'intervalle b x t2 et les troisièmes sommets d'ondulations (14) dans l'intervalle c x t3 coïncident les uns avec les autres.

14. Procédé de fabrication d'un carton ondulé multicouche selon l'une des revendications 1 à 13, **caractérisé en ce**
**qu'**une bande de papier ondulée (4) revêtue sur une face au moyen d'une bande de recouvrement en papier (1) plane, externe, particulièrement fine, avec un grammage inférieur à 100 g/m² et une bande de papier ondulé (5) revêtue sur une face par une bande de recouvrement en papier (3, 12) plane, interne, particulièrement fine, avec un grammage inférieur à 100 g/m² et une autre bande de recouvrement en papier (2) plane, externe, particulièrement fine, avec un grammage inférieur à 100 g/m², sont insérées dans une partie de chauffage, où elles sont totalement mastiquées ensemble.
